# EUROPEAN PATENT APPLICATION

(11) **EP 4 079 164 A1**
(43) Date of publication of application: **26.10.2022**
(21) Application number: 21169748.7
(22) Date of filing: 21.04.2021
(51) Int. Cl.: A23L 19/00, A23B 7/00, A23B 7/16, A23P 20/10

(54) **SUSTAINABLE FOOD PACKAGING**

(71) Applicant: EMPA Eidgenössische Materialprüfungs- und Forschungsanstalt, 8600 Dübendorf (CH); Lidl Schweiz AG, 8570 Weinfelden (CH)
(72) Inventor: Zimmermann, Tanja, 8600 Dübendorf (CH); De France, Kevin, 8600 Dübendorf (CH); Siqueira, Gilberto, 8600 Dübendorf (CH); Nyström, Gustav, 8600 Dübendorf (CH); Amoroso, Luana, 8600 Dübendorf (CH)
(74) Representative: E. Blum & Co. AG

(57) **Abstract**

The present invention relates to a method for coating a perishable food product; the coating comprises applying a bleached CNF composition to said food product. The invention further provides for coating compositions suitable for such methods and to coated food product comprising such coating. Due to the coating compositions employed in the inventive method, a sustainable packaging for a food product is provided.

## Description

The present invention relates to a method for coating, and thereby packaging, a perishable food product; to coating compositions suitable for such methods and to coated food product comprising such coating. Due to the coating compositions employed in the inventive method, a sustainable food product packaging is provided.

Typically, food supply chains involve large distances and multiple intermediaries. Each stage in the food supply chain, including production, processing, retail and consumption, drives a multitude of impacts on society and the environment. Packaging can facilitate the safe transit of food, even where it would not otherwise be accessible, and thus plays a central role in the global food system. At the same time, packaging practices and the nature of supply chains are under enquiry due to growing concerns over waste generation and the overwhelming use of non-renewable resources. As a result, there is an unmet need to provide more sustainable and environmentally friendly packaging materials and packaging practices. In this context, cellulose nanofibers (CNF) are one such material that is considered as a potential response within the field of food packaging.

Hult et al. (Cellulose 2010, 17 (3), 575-586.) describe an approach to high barrier packaging of paperboard and paper using a sprayable coating composition comprising MFC and Shellac. No significant improvements in both water vapour or oxygen transmission rate were observed without additionally using Shellac in the coating formulation. No information on the effect on other substrates than paper(board) is provided.

Deng et al. (J. Food Sci. 2017, 82 (2), 453-462) describe coatings comprising chitosan which is reinforced with cellulose nanocrystals (CNC). These coatings improve the storability of postharvest pear as they showed decreased oxygen permeability with increased CNC content. However, the water permeability of these coatings was unimproved. Further, these coatings required the addition of surfactants to improve the adhesion onto the fruit surface, possibly rendering the coating inedible.

Jung et al (WO2018/144482) describes food product coatings. The document discloses coating composition comprising cellulose nanomaterials and emulsion systems as an essential element. The coating compositions provide improved moisture barrier and wettability onto fruit surfaces and can control physiological activity and enhance storability of food products, such as fruits during ambient storage. However, although suitable, the efficiency of the coatings disclosed is somehow limited. The manufacturing of the coatings requires large amounts of energy, providing a poor overall balance sheet for energy. Further, the coatings require surfactants, possibly rendering the coating inedible.

In consequence, there is a need for improved methods to package perishable food products. Thus, it is an object of the present invention to mitigate at least some of these drawbacks of the state of the art.

These objectives are achieved by the method as defined in claim 1 and the coating compositions as defined in claim 12 and the coated food product as defined in claim 14. Further aspects of the invention are disclosed in the specification and independent claims, preferred embodiments are disclosed in the specification and the dependent claims.

The present invention will be described in more detail below. It is understood that the various embodiments, preferences and ranges as provided / disclosed in this specification may be combined at will. Further, depending of the specific embodiment, selected definitions, embodiments or ranges may not apply.

Unless otherwise stated, the following **definitions** shall apply in this specification:
As used herein, the term "a", "an", "the" and similar terms used in the context of the present invention (especially in the context of the claims) are to be construed to cover both the singular and plural unless otherwise indicated herein or clearly contradicted by the context. As used herein, the terms "including", "containing" and "comprising" are used herein in their open, non-limiting sense.

The term "agricultural waste material" is known in the field and includes unwanted or unusable material obtained during agricultural production. Such agricultural waste material includes sorted material, e.g. carrot peels, and non-sorted material, e.g. materials from crop-growing such as biomass from second or third crops, harvest residues and harvest waste (herbs, grains, root tubers), visually unappealing or otherwise unsellable crops. As the term implies, agricultural waste material distinguishes from forestry waste material, e.g. as wood lop. Rather, agricultural waste material includes vegetal material, straw, weed.

The term "vegetal material" is known in the field it includes vegetables and fruits. The term shall include both, fresh material and stale material. Further, the term shall include full vegetables / fruits or parts thereof, such as peels or other remaining parts from food processing. As the term implies, "vegetal material" excludes "wooden material".

The term "pomace" is known in the field and includes the solid remains of vegetal material after pressing or juicing; it typically contains the skins, pulp, seeds, and stems of the vegetal material. These solid remains are typically partially mechanically degraded due to the pressing or juicing process, whereby particulate size may vary substantially from less than 10 µm to over 5000 µm depending on the specific pressing or juicing process used. The term pomace shall include byproducts of food processing (wine, cider, oil) or intentionally produced material (carrot pomace, beet pomace). "Bleached pomace" consequently relates to pomace subjected to a bleaching step and "washed pomace" to a pomace subjected to a washing step.

The term "perishable food product" is known in the field and includes fresh produce and perishable food. Examples include fruits, tropical fruits and vegetables, such as bananas, mangos, apples, strawberries, blueberries, avocados, sweet potatoes. Such perishable food products may be sold to the consumer as a single peace, e.g. one mango, or in the form of a "trading unit", e.g. a basket of blueberries.

The term "cellulose nanofibers" (CNF) is known in the field and particularly refers to a cellulosic object composed of at least one elementary fibril, containing crystalline, para-crystalline, and amorphous regions, which may exhibit longitudinal splits, entanglement between cellulose nanofibrils, or network-like structure. Accordingly the term CNF includes microfibrillated cellulose (MFC) or nanofibrillated cellulose (NFC), as sometimes these terms are used interchangeably. CNF are typically produced through mechanical processes such as homogenization or grinding after optional chemical or enzymatic pretreatments. The term cellulose as used herein describes the known polysaccharide consisting of a linear chain of several hundred to over ten thousand β(1→4) linked D-glucose units.
Typically CNF fibers have a diameter between 1 to 100 nm, such as 4 to 100 nm, a length of 50 nm to 1 mm, and an aspect ratio >50, such as > 100; due to their origin, CNF contain cellulose as a main component and may additionally contain other polyoses and/or lignin and/or pectin. Typically, the amount of cellulose is more than 50 wt% before bleaching treatment, however this varies broadly depending on the original source material.

The present invention will be better understood by reference to the **figures.**
Fig. 1 shows optical micrographs of bleached (a, b) and unbleached (c, d) carrot fibers after: 0 passes (a, c), and 10 passes (b, d) through the microfluidizer.
Fig. 2 shows SEM micrographs at magnifications of 10,000x (and insets at 1,000x) of bleached (a, b) and unbleached (c, d) freeze-dried CNF samples after 0 passes (a, c) and 10 passes (b, d) through the microfluidizer.
Fig.3 shows SEM micrographs at magnifications of 5,000x of films (inventive CNF coatings) cross section obtained from bleached and non-bleached CNF. UV-vis light transmittance (%) at wavelength of 350-800 nm; and top view image of bleached (inventive) and non-bleached (comparison) CNF coatings are also shown.
Fig. 4 shows photographs of bananas, coated with CNF coatings as described herein:
   top = non-coated, control
   middle = non-bleached CNF Coating, comparison
   bottom = bleached CNF Coating, inventive,
   after 0, 6, 8, 10, 12 and 14 days.
Fig. 5 shows normalized weight loss (y-axis) of bananas, coated with CNF coatings as described herein over time (x-axis, days). In each column:
   left = non-coated, control
   middle = bleached CNF Coating, inventive
   right = unbleached CNF Coating, comparison.
Fig. 6 shows SEM top views of bananas, coated with CNF coatings as described herein
   a = non-coated, control; RMS roughness 80.2 micron
   b = non-bleached CNF Coating, comparison, RMS roughness 92.1 micron
   c = bleached CNF Coating, inventive; RMS roughness = 45.9 micron.
Fig. 7 is a sketch showing the process steps (a) ... (c) and the associated materials (1) ... (8); wherein
   (1) vegetal material
   (2) pomace)
   (3) bleached pomace
   (4) CNF suspension
   (5) coating composition
   (6) coated food product
   (7) perishable food product and
   (8) trading unit
      (a) the step of preparing and providing a coating composition, including sub-steps (a.1) ... (a.6);
      (b) the step of coating a perishable food product to obtain a coated (packed) food product; and
      (c) the optional step of assembling to a trading unit.

In more general terms, in a **first aspect,** the invention relates to a method for coating, and thereby packaging, a perishable food product. The method comprising the steps of (a) providing a coating composition (5), and (b) coating said perishable food product (7) with said coating composition (5) to obtain a coated food product (6), and (c) optionally further assemble said coated food product (6) to obtain a trading unit (8) of said coated food product; characterized in that step (a) comprises: (a.1) providing an agricultural waste material (1), (a.2) converting said vegetal material to pomace (2), (a.3) optionally washing said pomace to obtain a purified pomace (2'), (a.4) bleaching said pomace to obtain bleached pomace (3), (a.5) fibrillate said bleached pomace to obtain a CNF suspension (4), and followed by (a.6) adjust viscosity of said CNF suspension, and optionally add further components, to obtain a coating composition (5).

As will become clear in further detail below, the inventive process provides in a first instance a coated food product. Due to the properties of the coating, a traditional foil packaging is no longer required, as the coating serves as a packaging for the food product. Further, the inventive coatings are bio-degradable and even eatable. It is apparent that such coating is a major improvement over traditional plastic packaging of perishable food products.

Further, the inventive method supports circular economy. The method allows to close the circle by using agricultural waste material to extend shelf life of perishable food products as it reduces creation of future food waste due to spoilage.

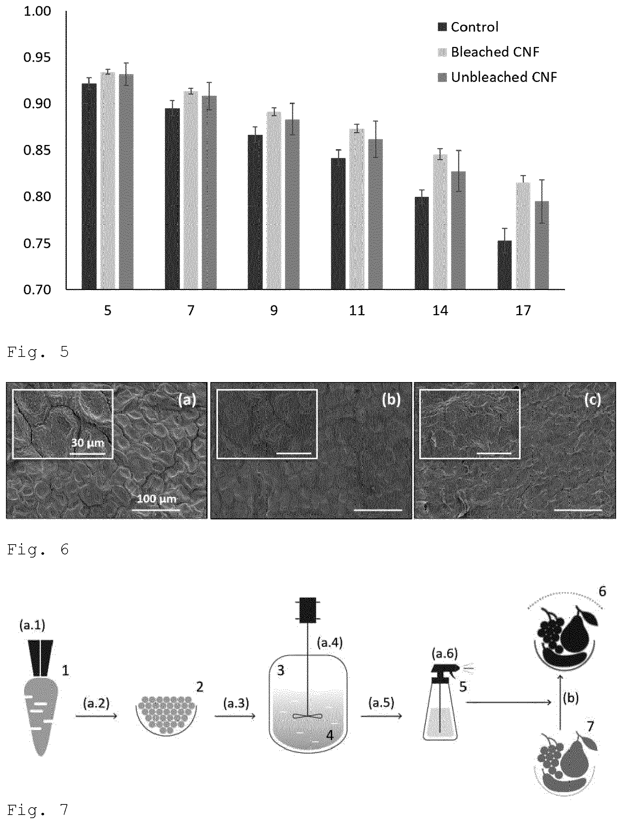

This aspect of the invention, particularly the process steps (a) to (c) and the materials (1) to (8) subject to the method, shall be explained in further detail below:
**General:** The inventive method comprises two essential process steps, namely preparing and providing a coating composition (5) [step a] and providing and coating on a perishable food product (7) to obtain a coated food product (6) [step b]. This coated food product may be further assembled to trading units (8) [step c]. This general concept is outlined in fig.7. Due to the multiple intermediaries in modern food supply chains, steps (a), (b) and (c) may be performed independently at different locations, i.e. one intermediary provides a coating composition, another intermediary attends to the coating of the perishable food products while the same or still another intermediary assembles the coated food product to a suitable trading unit. Still further, process step (a), comprising sub-steps (a.1) ... (a.6) may be performed independently at different locations and / or by different intermediaries. It is also apparent that the coating compositions (5) are adapted to the coating technique of step (b) and to the perishable food product to be coated.
**Agricultural Waste Material (1):** A broad range of such materials may be used, as discussed. Such materials include sorted waste material and non-sorted waste materials. Advantageously, materials contain lignocellulosic material (also termed dietary fibres, including cellulose, hemicellulose, lignin, pectin) in an amount of 25-99 wt% based on dry weight. Specifically, agrigultural waste material refers to vegetal waste material.
**Vegetal Material (1):** A broad range of vegetal material may be used. Suitable materials contain lignocellulosic material (also termed dietary fibres, including cellulose, hemicellulose, lignin, pectin) in an amount of 25-99 wt% based on dry weight. In view of the purpose of this invention, it is preferred to use vegetal material from waste materials, i.e. materials not sellable for human consumption. This includes stale material, partially degraded material or fresh material otherwise not complying with consumers expectations. By way of example, the vegetal material may be selected from carrots, apples, sugar beets, turnips, orange or other undefined organic waste from vegetable or fruit producer. Vegetal material includes whole fruits or vegetables as well as parts thereof. For example peels (e.g. carrot peels) or pomace (e.g. from oranges or apples) are suitable.
**Pomace (2):** The term is known in the field and discussed above. In the context of this invention, it refers to the solid remains of the agricultural waste material or vegetal material after pressing or juicing (step a.2), which removes water and partially mechanically degrades the original material. Depending on the material used, pomace may contain the skins, pulp, seeds, and stems of the vegetal material. Pomace is typically characterized by a particulate size of 10 to 5000 µm (as determined by optical microscopy) and water content of 25 to 75 %, both of which depend on the starting material and pressing or juicing process used.

In view of the broad range of material (1) useful in the inventive method, the composition of the pomace (2) may vary over a broad range. Typically, pomace contains on a dry weight basis
5 - 90 wt% cellulose (e.g. 7.20-81 wt%),
3 - 40 wt% hemicelluloses (e.g. 4.26-33.50 wt%),
1 - 20 wt% pectins (e.g. 1.50-13.40 wt%), and
5 - 70 wt% lignins (e.g. 15.30-69.40 wt%).

In a preferred embodiment, pomace is obtained from carrots, e.g. stale carrots or carrot peals ("carrot pomace"). It was found that carrot pomace provides a number of benefits to the inventive method, as it is a vegetal waste material (1) readily available and it is reliably converted to inventive coating compositions (5). Typically, carrot pomace contains on a dry weight basis
20 - 80 wt% cellulose (e.g. 28 wt%),
5 - 10 wt% hemicellulose (e.g. 6.7 wt%),
1.5 - 2.5 wt% pectin (e.g. 2.1 wt%), and
5 - 20 wt% lignin (e.g.17.5 wt%).

In a further preferred embodiment, pomace is obtained from broccoli, e.g. stale broccoli ("broccoli pomace").

In a further preferred embodiment, pomace is obtained from potato, e.g. stale potato or potato peels ("potato pomace").

In a further preferred embodiment, pomace is obtained from apples, e.g. stale apples or apple peels ("apple pomace").

In a further preferred embodiment, pomace is obtained from a mixture of vegetal waste material, such mixture comprising more than 50 wt%, preferably more than 75 w% of carrots + broccoli + potato + apple, including stale vegetables / fruits and peels of such vegetables / fruits ("mixed pomace").

**CNF suspension (4):** The term is known in the field and includes fibrillated material produced from homogenizing/grinding pomace or other lignocellulosic materials (step a.5). CNF suspensions contain CNF as a dispersed phase and typically contain an aqueous medium as continuous phase. Concentration of CNF may vary over a broad range, (e.g. up to 5 wt%). The aqueous phase typically contains > 95 wt% water and the remainder being soluble components present in material (1).

**Coating composition (5):** The term refers to CNF containing suspensions as discussed herein. If needed, such coating compositions are adjusted in its viscosity to the intended mode of application. Due to its CNF content, the coating compositions are shear-thinning. For dip-coating, step (b), a relatively low viscous composition is beneficial. For spray coating, step (b), a composition of higher viscosity is advantageous. Viscosity of coating compositions may be adjusted by adjusting CNF concentration and / or by adding additives modifying viscosity. It is within the ordinary skill to adapt CNF containing coating compositions to comply with the requirements of step (b). Suitable viscosities are in the range of e.g. 1 - 200 cP; suitable CNF concentrations are in the range of 0.1 - 2 wt%.

**Perishable food product (7):** The term is discussed above. In the context of the present invention, it was found that a wide variety of fresh fruits and fresh vegetables, including bananas, cucumbers, salad (lettuce), mushrooms, zucchini, carrots, peppers, and potatoes are suitable for a method as described herein.

**Coated food product (6):** The food product (7) may be coated by the coating composition (5) partly or in full. In many cases, a full coating, i.e. 100% of its surface, are coated.
In embodiments, more than 50%, 65%, 90%, 95% of the products surface is coated. It was found that even a partial coating improves shelf life and acceptance by the customers.
Typically, the coating has a thickness of 5 - 1000 nm. Typically, the coating contains more than 50 wt% CNF.

**Trading unit (8):** The term shall include packages and bundles sold to the customer. Many fruits or vegetables are sold in basket or packages, such as cherries, berries, apples and the like. Accordingly, a trading unit (8) comprises one or more coated food products (6) and a packaging component (such as boards, films, baskets).

Preparation of coating composition, **step (a):** Preparation of the coating composition is a multi-step process comprising steps (a.1) ... (a.6)
**step (a.1):** The material (1) is provided to the process by conventional means, ie. batch-wise or continuously.

**Step (a.2):** Converting raw vegetal material into pomace is a process known in the field, often referred to as juicing or pressing. Devices adapted for this step are commercially available. Suitable devices and process parameters may be selected by the skilled person, considering the type of starting material.

**step (a.3):** The optional step of washing the pomace is also known in the field. Typically, the pomace is combined with water (hot or cold), thoroughly mixed and the water is removed. Steps (a.2) and (a.3) may take place in the same device or in different devices.
The washing step is optional, inter alia depending on the quality of material (1) used in the process. In an embodiment of the invention, step (a.3) is omitted.

**step (a.4):** Bleaching is known in processing lignocellulosic material, it shall include oxidative treatments. Such bleaching step reduces lignin content and reduces or removes colorants from the starting material. It was found that bleaching also reduces energy consumption during fibrillation (step a.5). Surprisingly, and important in the context of this invention, bleaching facilitates fibrillation, coating and enables formation of a uniform coating on a food product (step b).

In one embodiment, bleaching is performed as a chlorine based bleaching process. Suitable oxidizing agents are Hypochlorite compounds, such as NaOCl. Suitable are aqueous conditions, e.g. using an acetate buffer. Suitable are reaction times of 0.5 - 5 hrs, e.g. 2 hrs and reaction temperatures of 50 - 100 °C, e.g. 80 - 90 °C.

In one embodiment, bleaching is performed as a chlorine free bleaching process. Suitable oxidizing agents are compounds comprising activated oxygen, such as peroxide, e.g. hydrogen peroxide. Suitable are aqueous conditions. Suitable are reaction times of 0.5 - 5 hrs, e.g. 2 hrs and reaction temperatures of 50 - 100 °C, e.g. 80 - 90 °C.

In one embodiment, bleaching is performed as a chlorine free bleaching process. Suitable oxidizing agent is ozone supported by UV radiation. Suitable are reaction times of 0.5 - 5 hrs, e.g. 2 hrs and reaction temperatures of 50 - 100 °C, e.g. 80 - 90 °C.

In one embodiment, bleaching is performed as an enzymatic treatment. Suitable enzymes are peroxidases and laccases, e.g. manganese peroxidase. Suitable are aqueous conditions. Suitable are reaction times of 0.5 - 5 hrs, e.g. 2 hrs and reaction temperatures of 20 - 50 °C, e.g. 30 - 40 °C.

Within the scope of the invention is also a combination of the above four bleaching methods, e.g. (i) enzymatic bleaching and ozone-based bleaching or (ii) chlorine free peroxide bleaching and ozone-based bleaching.

It was found that such bleaching facilitates fibrillation, a nominal 25% reduction of energy input was observed. Further, lignin and other residual components are removed and at the same time there is little, if any, effect to DP and BET.

**step (a.5):** Fibrillation of cellulosic material is a process known per se, it is a relatively efficient and scalable production technique for CNF isolation. Fibrillation typically includes refining, homogenisation and/or grinding. Thus, suitable fibrillation methods include homogenization, high pressure homogenization, mechanical homogenization (including microfluidization), grinding, microgrinding, high intensity ultrasonication, extrusion, and steam explosion. Preferred are homogenization and grinding.

Suitable devices for this step may be chosen by the person skilled in the art and include microfluidizers, grinders, extruders, and refiners. Accordingly, the concentration of the suspension subject to this step is adjusted to adapt to such devices. Typically 0.1 - 30 wt% cellulosic concentration are applicable.

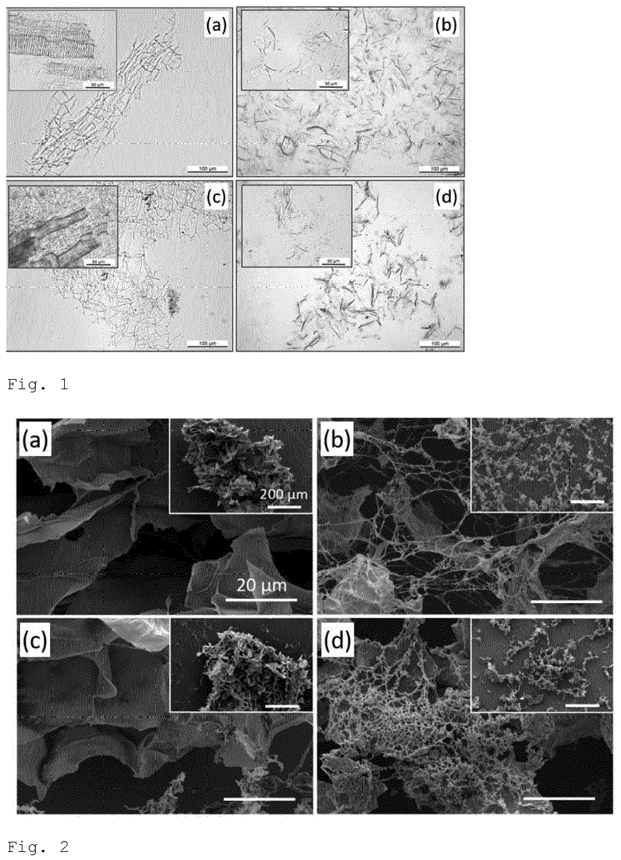

Starting material for and products obtained from this step are shown in fig. 1.

**step (a.6):** This step is a finishing step, optionally performed to fine-tune properties of the coating composition (5).
The CNF suspension obtained in step a.5 may be directly used for coating a product (7). In this embodiment, step a.6 is omitted and CNF suspension (4) and Coating composition (5) are identical.
In alternative embodiments, the CNF suspension (4) is modified for suitable application in step b. Typically, viscosity is adjusted, e.g by removing water and / or by adding viscosity modifying agents.

Coating of the perishable food product, **step (b):** Coating of food products is a method known per se. It is considered beneficial that the coating compositions described herein are compatible with known equipment and known coating methods. Accordingly, the coating method may be selected from spraying, dipping, casting, blade casting. All these methods may be applied to a perishable food product as described herein with a coating composition as described herein.

Assembling of the coated food product, optional **step (c):** This is a process step conventional in food industry. The food products coated in line with the present invention may be handled as conventional food products and packed according to customers preference.

In a **second aspect,** the invention relates to a coating composition (5), the coating composition being particularly suitable for a method as described herein, 1^{st} aspect of the invention. Applying the coating composition described herein allows manufacturing coated / packed food products as described herein, 3^{rd} aspect of the invention. In embodiments, the coating compositions are sprayable, biodegradable and / or edible. Preferably the coating compositions are sprayable, fully biodegradable and edible.

This aspect of the invention shall be explained in further detail below:
Inventive coating compositions (5) comprise a continuous phase (51) and a dispersed phase (52); the continuous phase (51) comprises water and optionally additives and the dispersed phase (52) comprises or consists of CNF. The CNF is of high purity, typically has a content of residuals lignin + pectin < 1 wt% and a content of carbohydrate cellulose + hemicellulose + monosaccharides > 99 wt%. The aqueous phase may comprise additives as outlined below and may further comprise pectins. Such pectins may be present due to the material (1) used for manufacturing the coating composition. Coating compositions complying with these characteristics are particularly suitable to coat perishable food products, as described herein.

Such coating compositions are obtainable according to the method described herein, 1^{st} aspect of the invention, steps (a.1) to (a.6). Accordingly, the invention also provides for a coating composition obtained by, or obtainable by, a method described herein, particularly where the method comprises the steps (a.1.), (a.2), optionally (a.3), (a.4), (a.5) and (a.6).

In embodiments, said CNF has a residual content of lignin + pectin < 0.5 wt%. In embodiments, said CNF has a content of carbohydrate cellulose + hemicellulose + monosaccharides > 99.5 wt%. This is considered a low content of residuals and consequently a high purity of CNF. Remaining residuals may belong to pectines, lignin, starch.

In embodiments, said CNF has a degree of polymerisation > 500, preferably > 900, much preferably > 1000.

In embodiments, the nanofibers of said CNF are in the range of 1 - 100 nm diameter, preferably 2 - 20 nm. In embodiments, the nanofibers of said CNF are in the range of 0.1 - 100 micrometers length, preferably 0.5 - 10 micrometers. Typically, the aspect ratio length / diameter is > 50, preferably > 100.

In embodiments, the coating composition as described herein is free of, or essentially free of, surfactants. Such absent surfactants include Tweens, such as Tween 80.

In embodiments, the coating compositions comprise additives. Suitably, the additives are dissolved in the aqueous phase. Additives may be selected from the group of film forming components.

Film forming components may provide additional value to the coating and include components that improve mechanical properties of the coating ("film former", e.g. pectin, rosin), and components that improve barrier properties of the coating ("barrier improver" e.g. plant triglycerides) and components that adjust viscosity of the coating composition ("viscosity modifier", e.g. pectin).

In view of the above, suitable coating compositions comprise 0.1-5 wt % CNF as described herein as a dispersed phase.

In embodiments the inventive coating composition comprises 0.1-5 wt % CNF as described herein as a dispersed phase and one or more of the following components: 0.1 - 3 wt% film former and / or 0.1 - 3 wt % barrier improver and or 0.1- 3 wt % viscosity modifier in the continuous phase.

In embodiments the continuous phase is an aqueous phase. In one embodiment, the continuous phase is water. In one further embodiment, the aqueous phase comprises up to 3 wt% film former and / or up to 3wt % barrier improver and/or up to 3 wt % viscosity modifier.

In embodiments, the invention relates to coatings obtained from the coating compositions described herein. It was found that the coating compositions are shear-thinning and film-forming and when applied to a perishable food product result in a highly optically translucent, non-toxic, coating which adheres well, can hold moisture extremely well and, functions as oxygen barrier.

In a **third aspect,** the invention relates to a coated / a packed food product, such food product being particularly obtainable by a method as described herein. The inventive coatings generate a modified atmosphere by creating a semipermeable barrier against oxygen, carbon dioxide, moisture, and solute movement. In some examples, the coatings prevent or mitigate weight loss, molding, and/or loss of firmness. As a consequence, these coatings help to sustain the food products integrity, appearance, and thereby marketability.

This aspect of the invention shall be explained in further detail below:
Coated food products exhibit an extended shelf life compared to non-coated food products ((7), i.e. the perishable food product subject to the inventive coating method). For example, a prolonged shelf life of 1 week for bananas and more than 2 hours for sliced apples is observed. This allows in many cases the replacement of traditional plastic foils for packaging such perishable food products. Solely by way of example, embodiments of the disclosed coatings can be used to prevent moulding and/or morphological changes in perishable food products. As a consequence, the "coated products" (6) are also considered "packed products".

In embodiments of the invention, the coating is applied on a perishable food product as described herein, the food product being selected from the list consisting of bananas, cucumbers, salad (lettuce), mushrooms, zucchini, carrots, peppers, and potatoes. Further exemplary food products that can be coated with the coating compositions disclosed herein include avocados, cantaloupe, papayas, mangos, honeydew melon, and the like.

In embodiments the invention provides for a coated food product (6), the product comprising a coating (61) partly or fully covering the surface of said food product (7), wherein the coating covers more than 50 area-% of the food product, preferably more than 80% of said food product. In view of the intended use, it is advantageous to fully coat the surface of said food product (6) with said coating (61) .

In embodiments the invention provides for a coated food product (6), where the coating (61) contains CNF in high purity. Advantageously, the coating contains more than 50 wt% CNF, preferably more than 90 wt% CNF, such as more than 95 wt% CNF. The term coating, as used herein, refers to a layer on the exterior of a perishable food product. The layer need not have a uniform thickness or be completely homogenous in composition. Typically the coatings are edible. This avoids consumer concerns over food safety. In embodiments, the coatings form a durable, inert, water-resistant cover over the object being coated.

In embodiments the invention provides for a coated food product (6), where the coating (61) has thickness 5 - 1000 nm. It is beneficial and surprising that such thin coatings provide the results disclosed herein. In one embodiment, the coating has a thickness of 10 - 100 nm. These values are typically obtained by spray coating. In another embodiment, the coating has a thickness of 100 - 500 nm; Such values are typically obtained by dip coating.

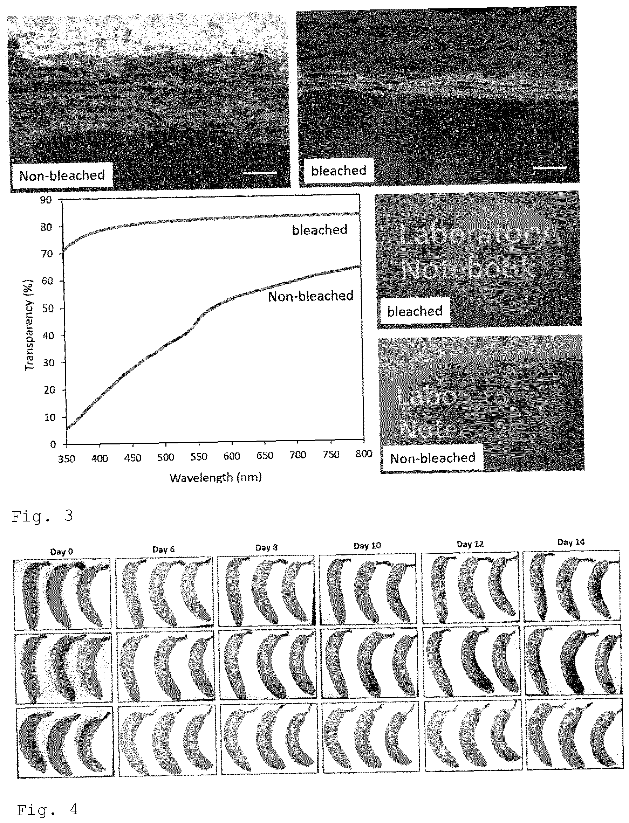

Further, the coating is characterized by beneficial mechanical properties (including density, modulus and tensile strength, toughness) and optical properties (including transmittance and opacity). These properties are difficult to measure on a coated food product directly. As a consequence, the properties are typically determined on the corresponding bulk material of the coating. Such bulk material may be considered a model system, which is obtainable e.g. by preparing a coating composition which is subject to vacuum filtration (c.f. examples, section B). Such model systems result in relatively thick coatings ("bulk material", or "self-supporting material"), typically in the range of 10 - 50 micrometres (c.f Fig.3). In embodiments, such coating has density 0.2 - 4 g/cm³, preferably 0.25 - 3.5 g/cm³.
In embodiments, such coating has modulus > 3, preferably > 4 GPa.
In embodiments, such coating has tensile strength > 80, preferably > 100 MPa.
In embodiments, such coating has toughness > 1.5, preferably > 2 MJ/m³.

In embodiments, such coating has transmittance at 600 nm > 70%, preferably > 80%. Accordingly, a coating on a food product, having a thickness in the range of 5 - 1000 nm, will have a transmittance at 600 nm > 90%, preferably > 95%.
In embodiments, the coating has opacity value < 10, preferably < 6. Accordingly, a coating on a food product, having a thickness in the range of 5 - 1000 nm, will have a opacity value < 5, preferably < 2.
Without being bound to theory, it is believed that the combination of beneficial mechanical and optical properties observed for these thin coatings are an enabling element for providing food products (6) showing improved shelf life.

In embodiments of the invention, the coating is free of, or essentially free of, surfactants.

In embodiments of the invention, the coating is free of, or essentially free of, chitosan.

In embodiments of the invention, the coating is an edible coating.

To further illustrate the invention, the following **examples** are provided. These examples are provided with no intend to limit the scope of the invention.

### Experimental:

### 2.1 Materials (step a.1)

Carrots were supplied from Stegro AG (Basadingen, Switzerland) and used as received. Sodium hydroxide (NaOH, Sigma Aldrich, Buchs, Switzerland), acetic acid (VWR International, Dietikon, Switzerland), and sodium chlorite (NaClO2, 80% powder, VWR International) were all used as received. Distilled water was used for all experiments.

### 2.2 Preparation of Carrot Pomace (steps a.2 and a.3)

Carrots were directly juiced using a standard kitchen juicer, and the carrot pomace was collected. The pomace was then dispersed at 2 wt % in 8 L of water and loaded into a glass 10 L reactor with a heating jacket. The carrot pomace suspension was washed at 80 °C for 2 h under gentle agitation, and subsequently discharged and vacuum-filtered using a fine metal mesh.

### 2.3 pomace bleaching (step a.4)

The washed carrot suspension was then subjected to a bleaching treatment (except for the comparative examples) as follows: 9 L of a 1:1:1 volume mixture of acetate buffer (81 g NaOH and 225 mL acetic acid in 2.775 L water), sodium chlorite (63.75 g NaClO2 in 3 L water), and water (3 L) was loaded into a glass 10 L reactor. 500 g of washed and filtered carrot pomace was then added to achieve a final concentration of ∼ 2 wt %. The carrot suspension was then bleached at 90 °C for 2 h under gentle agitation, and subsequently discharged, vacuum-filtered, and thoroughly washed with distilled water.

### 2.4 Fibrillation of carrot pomace to produce CNF suspensions (step. a.5)

The carrot pomace was then dispersed at 1 wt % in water for fibrillation, whereby suspensions were first mixed for 15 minutes using a high shear mixer. Suspensions were then passed 10x through a two-chamber microfluidizer (M110Y, Microfluidics Corporation, Newton, Massachusetts) operating at 8 bar.
Bleached carrot pomace (inventive): For the first 5 passes, 400 µm and 200 µm chambers were used in series to facilitate the CNF fibrillation; 200 µm and 100 µm grinders were used in series for the final 5 passes.
Non-bleached carrot pomace (for comparison): Due to clogging in the microfluidizer for non-bleached carrot pomace, a modified protocol was applied for the final 5 passes: 200 µm and 200 µm chambers were used in series for 4 passes, with 200 µm and 100 µm chambers used in series solely for the final (10th) pass.
Carrot CNF suspensions were stored in a refrigerator prior to characterization/use.

### 2.5 Spray Coating of CNF Suspensions onto Vegetable Surfaces (step b)

0.5 wt% carrot CNF suspensions as described above were sprayed onto the surface of locally purchased bananas using an atomizing sprayer (Ultra-airbrush, Harder & Steenbeck Gmbh & Co. KG). The bananas were then allowed to dry at room temperature for 5 min; this process was repeated two more times to ensure that the bananas were completely and uniformly coated. Bananas were weighed and visually observed daily for 14 days to determine the effects of the carrot CNF spray coating. Spray coating morphology on the banana peel surface was evaluated by SEM and optical profilometry (DektakXT Stylus Profiler, Bruker AXS GmbH, Karlsruhe, Germany).

The process steps according to #2.1 - #2.5 are illustrated in Figure 7.

### Analytics:

### A. Characterization of CNF Suspensions

Fiber morphology of CNF suspensions was characterized by scanning electron microscopy (Fei Nova NanoSEM 230) and optical microscopy (Leica DFC420 microscope). Specific surface area was calculated on freeze-dried CNF by the Brunauer-Emmett-Teller method on a Micromeritics 3 Flex device. Cellulose degree of polymerization (DP) was determined viscometrically according to the Staudinger-Mark-Houwink equation, and the limiting viscosity number was determined according to ISO 5351:2004. Residual chemical analysis was performed on freeze-dried CNF samples via hydrolysis using H2SO4 in a 2-step process.

| **Sample** | **Surface Area (m²/g)** | **Degree of Polymerization** | **Carbohydrate Content (%)** | | |
|---|---|---|---|---|---|
| | | | **Cellulose** | **Hemicellulose** | **Lignin** |
| non-bleached | 322 | 802 | 74.1 | 19.0 | 7.0 |
| bleached | 316 | 1069 | 61.8 | 38.1 | 0.1 |

### B. Preparation and Characterization of CNF Films

Carrot CNF films were formed by vacuum filtration of ∼ 0.5 wt % CNF suspensions. The films were then hot pressed at 90 °C and 20 bar for 30 min. Film morphology and optical properties were evaluated via scanning electron microscopy and UV/Vis spectroscopy. Tensile testing was performed using a micromechanical testing device equipped with a 5N load cell. Samples were strained at 1 µm/s until breakage to generate stress-strain curves.

| **Sample** | **Optical Properties** | | **Mechanical Properties** | | | |
|---|---|---|---|---|---|---|
| | **Transmittan ce at 600 nm (%)** | **Opacity (%)** | **Elongation at Break (%)** | **Modulus (GPa)** | **Tensile Strength (MPa)** | **Toughness (MJ/m³)** |
| **non-bleached** | 53.8 | 18 | 3.5 | 2.2 | 46 | 1.0 |
| **bleached** | 84.6 | 4.9 | 3.4 | 5. 0 | 117 | 2.4 |

### C. The following observations are provided in respect to the experimental results and figures provided herein.

[Fig. 1] Before homogenization (a, c) large chunks of pomace are visible by optical microscopy for both bleached (a) and unbleached (c) carrot pomace. After homogenization (b, d) the chunks are clearly broken into much smaller nanofibers. For bleached carrots (a, b), there is noticeably much fewer residuals in suspension, and the colour is much whiter (this is more evident in coloured microscopy images), demonstrating a clear benefit of bleaching.
[Fig. 2] Before homogenization (a, c) large chunks of pomace are visible by scanning electron microscopy for both bleached (a) and unbleached (c) carrot pomace. After homogenization (b, d) the chunks are clearly broken into much smaller nanofibers. For bleached carrot CNF (b), the nanofibers appear to be more fibrillated and less aggregated, demonstrating a clear benefit of bleaching.
[Fig 3] The structure of bleached and unbleached CNF films is seen by scanning electron microscopy, spectroscopy, and by photographs. Bleached CNF films are much thinner, and much more transparent than unbleached films, demonstrating the benefits of bleaching. Additionally, bleached films have no remaining orange colour, evident in colour images.
[Fig. 4] Bleached and unbleached CNF suspensions could both be sprayed onto the surface of bananas. However, only bananas sprayed with bleached CNF demonstrated much less darkening of the peel, compared to bananas sprayed with unbleached CNF or not sprayed at all (control). Bananas sprayed with bleached CNF appeared fresh for 14 days after purchase, compared to 8 days for bananas sprayed with unbleached CNF or not sprayed at all. This shows the value of bleaching in creating a sprayable coating.
[Fig. 5] The weight of bananas sprayed with bleached or unbleached CNF or not sprayed at all was recorded each after purchase. Bananas coated with bleached CNF lost much less weight than other bananas, showing that these bananas were able to hold water better, and therefore appear fresher and feel firmer.
[Fig. 6] The surface of bananas sprayed with bleached (c) or unbleached (b) CNF or not sprayed at all (a) was investigated by scanning electron microscopy. The surface of bananas sprayed with bleached CNF appeared much smoother than the other bananas, implying that this coating was much more complete. Bananas sprayed with unbleached CNF also showed signs of a coating, but it was not as uniform / complete.

## Claims

1. A method for coating a perishable food product (7), the method comprising the steps of
(a) providing a coating composition (5), and
(b) coating said perishable food product (7) with said coating composition (5) to obtain a coated food product (6), and
(c) optionally further assemble said coated food product (6) to obtain a trading unit (8) of said coated food product;
**characterized in that** step (a) comprises:
(a.1) providing an agricultural waste material (1),
(a.2) converting said waste material to pomace (2),
(a.3) optionally washing said pomace to obtain a purified pomace (2'),
(a.4) bleaching said pomace to obtain bleached pomace (3),
(a.5) fibrillating said bleached pomace to obtain a CNF suspension (4),
(a.6) optionally adjusting viscosity of said CNF suspension, and / or adding further additives, to obtain a coating composition (5).

2. The method of claim 1 where said waste material (1) is selected from vegetal waste material, preferably carrots, apples, broccoli, (in each case fresh or stale as well as full and parts (peals) thereof).

3. The method of claim 1 where said pomace (2) has
• a particulate size between 10 and 5000 micrometer; and / or
• a water content between 25 and 75%.

4. The method of claim 1 where said bleached pomace (3)
▪ contains at most 50% of colorants (including dyes and pigments) when compared to non-bleached pomace; and / or
▪ contains at most 50% of lignin and other residuals when compared to non-bleached pomace.

5. The method of claim 1 where said CNF suspension (4) comprises as dispersed phase cellulose fibers with diameter between 1-100 nm and an aspect ratio >50.

6. The method of claim 1 where said coating composition (5)comprises between 0.1 and 3 wt% CNF fibers; and/or has a viscosity between 1 and 200 cP.

7. The method of claim 1 where said food product (7) is selected from the group consisting of fresh fruits and fresh vegetables, preferably bananas, cucumbers, salad (lettuce), mushrooms, zucchini, carrots, peppers, and potatoes.

8. The method of claim 1 where said step (a.4) is selected from chlorine bleaching, peroxide bleaching, ozone / UV radiation bleaching, and enzymatic bleaching processes.

9. The method of claim 1 where said step (a.5) is selected from homogenization and grinding.

10. The method of claim 1 where said step (b) is selected from spray coating, dip coating, and casting, preferably spray coating.

11. The method of claim 1 where said step (c) comprises grouping together a multitude of coated food products (6) in a package or bundle of predetermined size and/or weight.

12. A coating composition (5) comprising a continuous phase (51) and a dispersed phase (52), wherein
the continuous phase comprises water and optionally film formers and / or barrier improvers; and
the dispersed phase comprises CNF, said CNF complies with one or more of the following parameters:
▪ content of residuals lignin + pectin < 1 wt%;
▪ content of carbohydrate cellulose + hemicellulose + monosaccharides >99 wt%, preferably >99.5 wt%;
▪ diameter between 1 and 100 nm and an aspect ratio fiber length : fiber diameter >50.

13. The coating composition of claim 12, which is free of, or essentially free of, surfactants.

14. A coated food product (6), the product comprising a coating (61) partly or fully covering the surface of said food product (7),
wherein the coating (61)
▪ contains more than 50 wt% CNF and
▪ has a thickness 5-1000, preferably 10-100 nm; and
wherein the coating material (61) complies with one or more of the following parameters, each parameter determined on a model system having a thickness of 10-50 micrometers:
▪ density 0.2 - 4 g/cm³;
▪ modulus > 3 GPa;
▪ tensile strength > 80 MPa;
▪ toughness > 1.5 MJ/m³;
▪ transmittance at 600 nm > 70%;
▪ opacity value < 10.

15. A coated food product according to claim 14, the food product being selected from the list consisting of fresh fruits and fresh vegetables, preferably selected from the group consisting of bananas, cucumbers, salad (lettuce), mushrooms, zucchini, carrots, peppers, and potatoes.
